# EUROPEAN PATENT SPECIFICATION

(11) **EP 0 450 581 B1**
(45) Date of publication and mention of the grant of the patent: **28.06.1995**
(21) Application number: 91105214.0
(22) Date of filing: 02.04.1991
(51) Int. Cl.: H01M 4/04

(54) **Polymerization method**
Polymerisationsverfahren
Procédé de polymérisation

(30) Priority: 04.04.1990 JP 89352/90; 04.04.1990 JP 89353/90
(43) Date of publication of application: 09.10.1991
(73) Proprietor: SONY CORPORATION, Tokyo (JP)
(72) Inventor: Omaru, Atsuo, c/o SONY ENERGYTEC INC., Koriyama, Fukushima-ken (JP); Azuma, Hideto, c/o SONY CORPORATION, Tokyo (JP); Yasuda, Akio, c/o SONY CORPORATION, Tokyo (JP); Nishi, Yoshio, c/o SONY CORPORATION, Tokyo (JP)
(74) Representative: TER MEER STEINMEISTER & PARTNER GbR

(56) References cited:
- DE-A- 3 508 266
- FR-A- 2 612 695
- DATABASE WPIL Week 8816, Derwent Publications Ltd., London, GB; AN 88-107981 and JP-A-63055853
- DATABASE WPIL Week 8917, Derwent Publications Ltd., London, GB; AN 89-125633 and JP-A-1071061
- PATENT ABSTRACTS OF JAPAN vol. 89, no. 823 (E-810)23 August 1989 and JP-A-1132051

## Description

The present invention relates to an electrode for a cell which contains an active material and electrically conductive polymer and a method making the same by electrochemical polymerization.

Recently, as the electronic equipment is progressively reduced in size, high energy density is similarly demanded of the cell functioning as its power source. On the other hand, development of a cell which is extremely thin so as to be directly built into the device in the electronic equipment has been desired.

For realizing a high energy density of the cell, it suffices to improve the properties of the active material for the negative or positive electrodes and, from this standpoint, researches are being conducted in various fields concerning the improvement of the active materials.

However, limitations are placed on increasing the cell capacity by the improvement in the properties of the active material and it is difficult to expect further drastic improvement in the cell capacity.

On the other hand, with the negative or positive electrodes of the cell, the current collector, binder and electrically conductive material of the electrode material, which is not the active material, accounts for about 40 percent by weight and represents a so-called dead space. Above all, in designing the extremely thin cell, limitations are placed on reducing cell thickness because of the current collector thickness, such that, the thinner the cell, the higher the ratio of the current collector and the lower the energy density of the cell.

Thus, in conventional cells, the percentage of the material other than the active material in the electrode is high and energy density is unsatisfactory, such that, even if the performance of the active material is to be improved, the merit is not exhibited fully.

It is an object of the present invention to provide an electrode for cell in which the cell capacity may be improved by effective utilization of the dead space.

It is another object of the present invention to provide an electrode for a cell which can be reduced in thickness significantly to allow to produce a thin type cell which can be directly built into a substrate of an electronic equipment.

It is further object of the present invention to provide a method for electrochemical polymerization which enables a wide variety of the functional particles to be taken into the electrically conductive polymer to assure the application to various usages.

It is still further object of the present invention to provide a method for electrochemical polymerization in which the compositional ratio between the electrochemically polymerized electrically conductive polymer and the functional particles can be set freely and in which a large quantity of the functional particles can be taken.
Fig. 1 is a schematic sectional view showing the construction of the electrochemical polymerization cell employed in the Example;
Fig. 2 is a diagram showing a discharge curve of the secondary cell using the electrode of the present invention as a negative electrode and a discharge curve of Comparative Example;
Fig. 3 is a diagram showing a discharge curve of a cell using the electrode of the present invention as the positive electrode and a discharge curve of the comparative Example; and
Fig. 4 is a schematic sectional view showing the conventional method for electrochemical polymerization.

The electrode for a cell of the present invention comprises powders of an active material and an electrically conductive polymer.

That is, according to the present invention, the binder, electrically conducting material and the current collector among the electrode constituent material is replaced by the electrically conducting polymer, the electrically conducting polymer itself also acts as the active material to reduce the dead space effectively to increase the capacity.

According to the present invention, the electrically conductive polymer and the active material are compounded to produce a cell electrode. Among the compounding methods is a method comprising mixing powders of an electrically conductive polymer, occasionally adding the binder or the electrically conducting material and molding the mixture under pressure together with the current collector.

For forming the electrically conductive polymer into a film, it is a good method to introduce the powders of the active material for compounding. If this method is used, the current conducting material may be omitted if the electrically conductive polymer film is standing on its own, so that an advantage is derived from the viewpoint of the dead space. Among the methods for forming the electrically conductive polymer into a film, there is a method consisting of dissolving the polymer (copolymer) soluble in a solvent, coating and drying the solution for polymerization, a method of thermally polymerizing a thermally polymerizable monomer (copolymer or polymer), a method for forming a film by electrochemical polymerization, or a method for forming a film by gas phase polymerization, such as CVD or plasma polymerization. Above all, the method of electrochemical polymerization is suited for obtaining a thin film.

In the electrochemical polymerization method, a pair of electrodes are placed in an electrically cell filled with the electrochemically polymerizable liquid and the current is supplied between these electrodes for electrically depositing the electrically conductive polymer on one of the electrodes. By dispersing the active material in the electrochemically polymerizable liquid, the active material is attracted towards the electrode so as to be introduced into the electrically conductive polymer film.

The electrode may be arranged vertically in the electrolytic cell. In this case, the active material is attracted towards the electrode by utilizing electrophoretic properties of the active material, such that constraints are imposed on the type and the amount of the utilizable active material.

As an example, it has been reported in a lecture (1E17) at an Electro-Chemical Association held in April 1989 that the particles of tungsten oxide WO₃ dispersed into a polymer solution can be taken into polypyrrole so that polypyrrole can be provided with a function such as electrochromism.

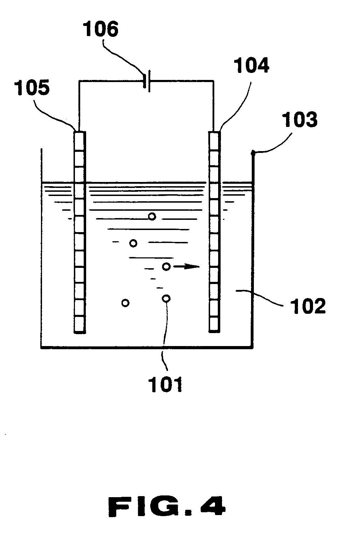

Fig. 4 shows the method for electrolytic polymerization for taking tungsten oxide WO₃ into polypyrrole. With this method, a positive pole 104 and a negative pole 105 are arranged vertically in opposition within an electrolytic cell 103 filled with an electrolytic polymer solution 102 into which tungsten oxide powders 101 are dispersed and the current is supplied by a dc power source 106 placed between the positive pole 104 and the negative pole 105 to effect electrochemical polymerization. Particles of tungsten oxide are attracted towards the positive pole 104 by electrophoresis at the same time that polypyrrole is electrochemically polymerized. Thus the tungsten oxide particles are taken into the so-produced polypyrrole film so that the function proper to tungsten oxide is provided to polypyrrole which is the electrically conductive polymer.

Meanwhile, with the above method for electrochemical polymerization with the positive and negative poles placed vertically in opposition to each other, the particles are taken during polymerization by taking advantage of electrophoretic properties of the particles, it can not be easily applied to functional particles exhibiting poor dispersibility. On the other hand, even if affinity to the electrically conductive polymer is exhibited, the method cannot be applied to particles not exhibiting electrophoretic properties. Thus the kind of the applicable functional particles is limited and the method cannot be adapted to multifarious usages.

In addition, with the above described method, the functional particles are attracted towards the electrode against the gravity, such that constraints are necessarily placed on the quantity of the functional particles that can be taken and a large quantity of the particles cannot be taken.

Thus the electrode to be deposited by the polymer is preferably arranged horizontally. If the electrode is placed horizontally in the electrochemical polymerizable solution, an electrochemical polymerization may be achieved as the active material is heaped on one of the electrode by utilizing the gravitational force, so that the active material of all types can be taken at any arbitrary composition. The term "horizontal" is meant to permit some inclination.

On the other hand, while the active material or the electrically conductive polymer is arbitrary, if the electrode of the present invention is used as the negative electrode of the cell, the active material that is used as the anode active material of is selected, while the electrically conductive polymer exhibiting cationic doping properties is selected. The anode active materials include Li, carbon, Li alloys (Li-M:M being Aℓ Sn or Pb), carbon-metal complex by electro plating or electroless plating (carbon-M:M being Aℓ, Sn or Pb), Aℓ, tungsten dioxide (WO₂) or powders of the electrically conductive polymer. Any of the active materials utilizable as the anode active material of the cell. The electrically conductive polymers may be optionally selected from the cation (such as Li cation) dopable materials, such as polyparaphenylene and its derivatives, polythiophene and its derivatives, polyacetylene and its derivatives, polypyridine and its derivatives.

Conversely, when the electrode of the present invention is used as the positive electrode of the cell, the active material used as the cathode active material is selected, while the electrically conductive polymer having the anionic doping properties is selected. As the cathode active material, any material that may be used as the cathode active material of the cell may be used. The electrically conductive polymers may be selected arbitrarily from the anion dopable materials, such as polyaniline and its derivatives, polypyrrole and its derivatives, polyazulene and its derivatives, polythiophene and its derivatives, polyacetylene and its derivatives, polyparaphenylene and its derivatives and triphenylamine and its derivatives.

Two or more of the above mentioned active materials and the electrically conductive polymers may be used in combination.

Although the active material and the electrically conductive polymer may be used in any mixture ratio, since the maximum amount of the active material possible is advantageous when using as the coin type cell electrode, it is desirable that the electrically conductive polymer as the binder or as the electrically conductive material be as small in quantity as possible. When the electrode is used as the electrode for the so-called jerry role type cell, the amount of the electrically conductive polymer be as low as possible in view of resiliency.

With the electrode for the cell of the present invention, at least part of the binder, electrically conducting material and the current collector of the electrode constituting material is replaced by chargeable and dischargeable electrically conductive polymer. Since the polymer also functions as the active material, the percentage of the dead space occupied in the electrode is reduced to assure the capacity.

Also, by selecting the particle size of the compounded active material or the polymerization conditions of the electrically conductive polymer, an extremely thin electrode having a comparable film thickness with the particle size of the active material may be obtained, and a cell having a thickness of 1 mm or less may be constituted by making use of the electrode.

The impressed electrochemical polymerization method is applicable for various usage.

In electrochemical polymerization, one of the electrodes on which the electrically conductive polymer is polymerized is placed horizontally in the vicinity of the bottom of the polymerizable liquid, after which the functional particles are dispersed or precipitated or being precipitated in the electrochemically polymerizable solution. Alternatively, when the functional particles are floated, the electrode on which the electrically conductive polymer is polymerized is placed horizontally in contact with the liquid surface of the polymerizable solution. In this manner, any kinds of functional particles, such as functional particles exhibiting poor dispersibility, particles exhibiting affinity with the electrically conductive polymer but devoid of electrophoretic properties or functional groups having extremely small particle size, are taken into the electrochemically polymerized electrically conductive polymer (electrochemically polymerized membrane).

Hence, any types of the functional particles, such as active materials of the cell, electrochromic materials, superconductive materials, sensor materials or magnetic materials, may be used as the functional groups, while two or more types of the functional particles may be used in combination.

Among the electrochemically polymerizable solutions are a monomer or an oligomer as the constituent unit of the solvent or the electrically conductive polymer materials. If necessary, electrolytes or the like may be added. Any of the solvents, monomers, oligomers or the electrolytes that are used in usual electrochemical polymerization may be employed.

There is no limitation to electrochemically polymerized electrically conductive polymers, examples thereof being polyaniline, polypyrrole, polythiophene, polyparaphenylene, polyazulene, polypyridine triphenylamine and derivatives thereof.

If the electrode is placed horizontally in an electrochemically polymerizable solution containing functional particles to carry out polymerization, the functional particles are attracted by gravity or a buoyancy onto the electrode. Thus, even those functional particles which are poor in dispersibility, poor in electrophoretic properties or which are so small in size as to be floated are heaped on the electrode surface so as to be taken into the electrically conductive polymer.

On the other hand, the speed with which the functional particles are taken into the electrically conductive polymer is governed to a larger extent by the rate of particle precipitation. That is, finer particles or functional particles exhibiting superior dispersibility are taken at a slower rate. On the other hand, the rate at which the electrically conductive polymer is formed depends on the current value.

Hence, by suitably combining the precipitation speed of the functional particles and the current value to the electrolytic electrode, it is possible to control the composition of the electrically conductive polymer and the functional particles.

### Example

The present invention will be explained hereinafter by referring to the Examples.

### Example 1

Polyparaphenylene powders were synthesized in accordance with the Kovacic method. The method for synthesis is as follows:

To 150 mℓ of a benzene as a monomer (prime quality) were added 10 g of AℓCℓ₃ (first quality) and 10.5 g of CuCℓ₂ (prime quality), the resulting mass was reacted at 35°C for 6 hours under stirring in an argon gas stream to produce precipitates, which were washed with hydrochloric acid and water and dried to red to brownish powders. These powders were dried in an argon stream at 300°C for two hours.

Using the thus obtained polyparaphenylene powders as part of the binder, coin type secondary cells were tentatively produced in accordance with the following method.

0.7 g of polyparaphenylene powders, 9 g of pitch coke powders (38 »m or less in particle size) and 0.3 g of polyvinylidene fluoride were mixed and then added to by dimethylformamide (DMF) to produce a paste which was coated on a stainless steel net and dried and pressedly attached under the pressure of 5 ton/cm². This paste was punched to a diameter of 15.5 mm and used as an active electrode. A Li metal plate punched to a diameter of 15.5 mm was used as a counter electrode. The Li quantity is in excess relative to an electrochemical equivalent of active material in the active electrode.

As an electrolytic solution, LiCℓO₄ dissolved in a 1:1 (volume ratio) of the mixed solvent of propylene carbonate and 1,2-dimethoxyethane at a rate of 1 mol/l was used, while a polypropylene non-woven cloth was used as a separator.

The charging-discharging capacity of the operating electrode was measured by using the tentatively produced cell. Charging and discharging were performed using a constant current and a current density of 0.58 mA/cm², charging was made up to Li counter electrode of 0 mV and discharging was made up to Li counter electrode of 2000 mV to measure the capacity.

The discharge capacity at this time was 130 mAH/g. Unless otherwise specified, the capacity means the value per unit weight of the operating pole.

### Example 2

In the present Example, powders of the active material was introduced to provide an electrode during electrochemical polymerization of the electrically conductive polymer.

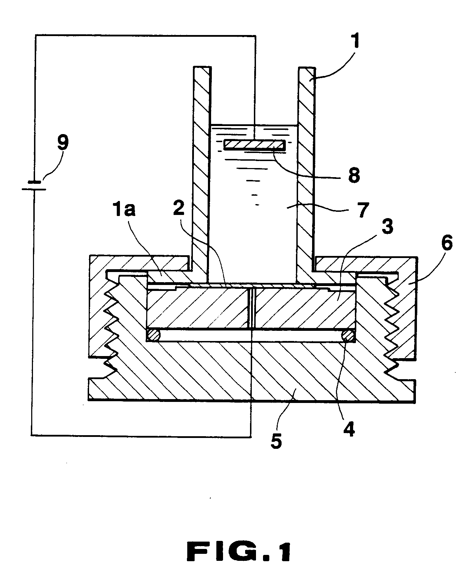

The constitution of the electrochemical polymerization cell used in the present Example is as shown in Fig. 1.

With the present electrochemical polymerization cell, a disc shaped platinum plate 2 placed at the bottom of a cylindrical glass tube 1 having a flange section 1a at one end and the bottom of the glass tube 1 is hermetically sealed with this platinum plate 2. The glass tube 1 has an inside diameter of 16 mm. The platinum plate 2 and the glass tube 1 are clamped together to assure a hermetically sealed state by threading together a pair of retaining metal fittings 5 and 6 via a disc-shaped polytetrafluoroethylene plate 3 of the same radius as the flange section 1a of the glass tube 1 and an O ring 4.

An electrochemical polymerizable solution 7 is charged into the inside of the glass tube 1 and a disc-shaped stainless steel plate 8 is placed horizontally in the vicinity of the liquid surface in opposition to the platinum plate 2 at the bottom of the glass tube 1. It is to be noted that, when the electrochemical polymerization cell is mounted in position, the platinum plate 2 is placed horizontally.

A dc power source 9 is connected to the platinum plate 2 and the stainless steel plate 8 to constitute an electrochemical polymerization cell having the platinum plate 2 as the positive electrode and the stainless steel plate 8 as the negative electrode.

Using the above described electrochemical polymerization cell, an electrode having pitch coke powders as the active material was tentatively produced.

First, 0.1 mol/ℓ of tetrabutyl ammonium hexafluorophosphate as the electrolyte and 1 mole/ℓ of benzene as the monomer were dissolved in nitrobenzene to prepare an electrochemically polymerizable solution.

This electrochemically polymerizable solution was introduced into a glass tube 1 of the electrochemical polymerization cell.

33 mg of pitch coke powders, with particle size of 38 »m or less, were charged therein and stirred gently. In this manner, the pitch coke powders were dispersed moderately and precipitated onto the platinum plate 2.

Immediately thereafter, a stainless steel plate 16 mm in diameter was immersed and a polyparaphenylene film was electrochemically polymerized on the platinum plate 2 acting as the positive electrode. The polymerization electrical quantity was 32 Coulomb.

A complex polyparaphenylene pitch coke complex film prepared on the platinum plate 2 was washed and dried at 300°C in an argon gas stream so as to be used as an operating electrode. A coin-shaped secondary cell as that produced in Example 1 was tentatively produced.

Discharge capacity of the secondary cell was measured as in Example 1 and found to be 181.5 mAH/g.

### Comparative Example 1

9 g of pitch powders (with particle size 38 »m or less) and 1 g of polyvinylidene fluoride were mixed together and added to by dimethylformamide (DMF) into a paste, which was then coated on a stainless steel net, dried and press attached under a pressure of 5 ton/cm².

The dried mass was punched to a diameter of 15.5 mm so as to prepare an operating pole and a coin-shaped secondary cell was tentatively produced by a procedure otherwise the same as in Example 1.

The discharge capacity of the cell was 122.7 mAH/g.

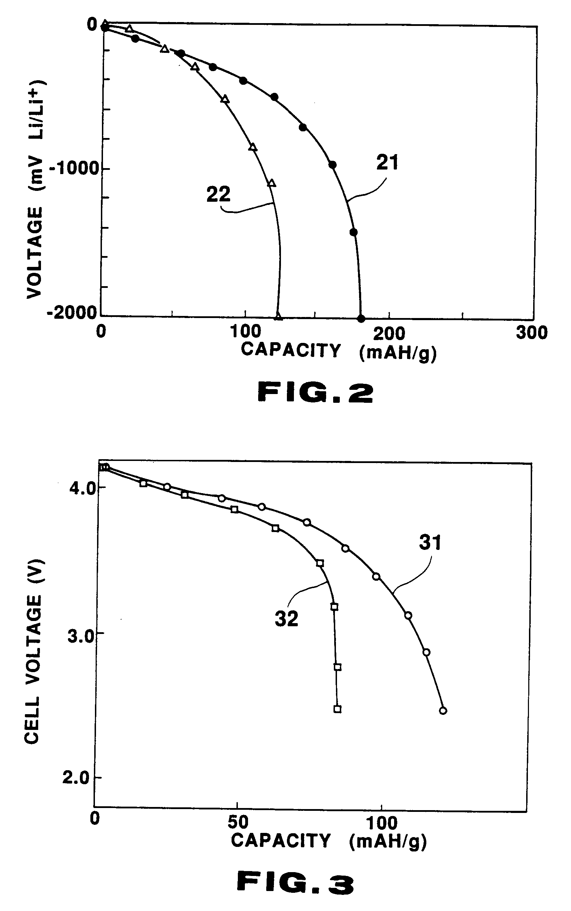

Fig. 2 shows the discharge curve of the cells prepared in Example 2 (line 21) and Comparative Example 1 (line 22). The ascendancy of the negative pole to which the present invention is applied is apparent from the review of Fig. 2.

### Example 3

Using the above described electrolytic polymerization cell, an electrode having pitch coke powders as the active material was tentatively produced.

First pyrrole was added at a rate of 0.2 mol/ℓ into a propylene carbonate solution containing 0.2 mol per liter of lithium perhydrochlorate as the electrolyte and dispersed to prepare an electrolytic polymer solution. This electrolytic polymer solution was charged into a glass tube 1 of an electrolytic polymerization cell.

40 mg of LiCoO₂ powders (less than 38 »m in particle size) were charged thereto as the functional particles and stirred gently. In this manner, LiCoO₂ powders were dispersed moderately and precipitated onto the platinum plate 2.

A stainless steel plate 8 which is 16 mm in diameter was immediately immersed from above and a polypyrrole film was electrolytically polymerized on the platinum plate 2 as the positive electrode, with the stainless steel plate 8 as the negative electrode. The polymerization electrical quantity was 10 Coulomb.

The composite polypyrrole-LiCoO₂ film, thus prepared on the platinum plate 2, contained substantially the charged amount of the LiCoO₂ powders and exhibited independence.

This composite film was washed and dried at 80°C in an argon stream to tentatively prepare a coin type cell. An Li metal plate punched to a diameter of 15.5 mm was used as the counter electrode while a 1 mol/ℓ solution of LiCℓ₄ in a 1:1 (by vol.) ratio) mixed solution of propylene carbonate and 1,2-dimethoxyethane was used as the electrolytic solution. A polypropylene porous membrane was used as a separator.

This coin type cell was charged for two hours at 4.0 V and discharged at 1 mA to 2.5 V to measure the capacity. The discharging capacity was found to be 4.1 mAH.

### comparative Example 2

50 mℓ of the electrolytic polymer solution which is the same as that of Example 1 was taken into a beaker cell and 200 mg of the LiCoO₂ powders were suspended. As shown in Fig. 2, two platinum electrodes 16 mm in diameter were placed vertically therein to perform electrolytic polymerization. The polymerization electrical quantity was 10 Coulomb, as in Example 1.

Thus a polypyrrole film, on which LiCoO₂ powders were sparsely deposited on the positive side platinum electrode, was obtained.

A cell similar to that obtained in Example 1 was tentatively produced, with this polypyrrole film as the electrode, and the capacity was measured and found to be 0.32 mAH. Although the capacity was markedly low as compared to the cell prepared in Example 1, this is thought to be ascribable to the polypyrrole film hardly containing the LiCoO₂ powders as the active material.

In the foregoing, the present invention is applied to the negative electrode of the secondary cell. An example of application to a positive electrode of the lithium cell is now explained.

### Example 4

100 mℓ of an electrolytic solution, in which aniline was dispersed at a rate of 0.2 mol/ℓ into 1 mol/ℓ aqueous solution of perhydrochloric acid, was taken in a beaker cell and two platinum electrodes each with an area of 10 cm² were immersed and a constant current of 10 mA was caused to flow. After supplying the current of 100 Coulomb, polyaniline electrically precipitated at the anode was washed with methanol and dried in vacuo to produce polyaniline powders.

The produced polyaniline powders and LiCoO₂ were mixed thoroughly at a weight ratio of 1:9 and molded to a disc 15.5 mm in diameter with a stainless plate net at a pressure of 5 ton/cm² to produce an electrode plate.

Using this electrode plate, a coin-shaped cell was tentatively produced using an Li metal plate punched to a diameter of 5.5 mm as a counter electrode. LicℓO₄ was dissolved at a rate of 1 mol/ℓ in a 1:1 mixed solvent (volume ratio) of polypropylene carbonate and 1,2-dimethoxyethane so as to be used as an electrolytic solution, while a polypropylene porous membrane was used as a separator.

This cell was charged for two hours at 4.1 V and discharged at 1 mA to 2.5 V to measure the capacity.

The present tentative cell including the stainless steel net had the discharge capacity of 92 mAH/g.

### Example 5

Pyrrole was dispersed at a concentration of 0.2 mol/ℓ in a propylene carbonate solution containing lithium perhydrochlorate as the electrolyte at a rate of 0.2 mol/ℓ to produce an electrochemically polymerizable liquid, which was then poured into an electrochemical polymerization cell similar to that used in Example 2.

50 mg of LiCoO₂ powders (particle size, not more than 38 »m) were charged therein as cathode active material and gently stirred. The LiCoO₂ powders were moderately dispersed and precipitated on the platinum plate 2. A stainless steel plate 8 was then immediately immersed from above and a polypyrrole film was electrochemically polymerized on the platinum plate 2 as the positive electrode, using the stainless steel plate 8 as the negative electrode. The polymerization electrical quantity was 32 Coulomb.

The so-produced polypyrrole-LiCoO₂ complex membrane was washed and dried at 80°C in an argon gas stream so as to be used as an electrode plate. Using this electrode plate, a cell was tentatively produced as in Example 4, and its capacity was measured.

The discharge capacity was found to be 122 mAH/g.

### Comparative Example 3

LiCoO₂ powders (particle size, 38 »m or less), polyfluoroethylene powders and graphite powders were mixed at a rate of 9:0.4:0.6 and molded with a stainless steel net under a pressure of 5 ton/cm².

The molded mass was punched to a diameter of 15.5 mm to an electrode plate and a coin-shaped lithium cell was tentatively produced by a procedure otherwise the same as in Example 3 and its discharge capacity was measured.

The discharge capacity of the cell was found to be 84 mAH/g.

Fig. 3 shows a discharge curve of the cell tentatively produced in Example 5 (line 31) and Comparative Example 3 (line 32). It is seen from Fig. 3 that superior characteristics may be displayed even when the present invention is applied to a positive pole.

### Example 6

An electrolytic polymer solution consisting of a solution in benzene of tetrabutyl ammonium hexafluorophosphate as the electrolyte and benzene as the monomer at the rates of 0.1 mol/ℓ and 1 mol/ℓ, respectively, was prepared, and poured into an electrolytic polymerization cell which is the same as that in Example 2.

33 mg of pitch coke powders (particle size of 38 »m or less) were charged therein as functional particles and a stainless steel plate 8 mm in diameter was immersed from above and a polyparaphenylene film was electrolytically polymerized on the platinum plate 2 as the positive electrode, with the stainless steel plate 8 as the negative electrode. The polymerization electrical quantity was similarly 10 Coulomb.

The so-produced polyparaphenylene pitch coke composite film was washed and dried at 30°C in an argon stream so as to be used as an operating electrode. A test cell was prepared, with Li as the counter-electrode, and a constant current between 0 V and 2 V was supplied. The current of 2.9 mAH could be supplied.

Thus the composite film may be used as, for example, the negative electrode of the Li secondary cell.

### Comparative Example 4

Using the electrolytic polymer solution same as that in Example 6, pitch coke powders were dispersed as in Comparative Example 2 to perform electrolytic polymerization.

However, pitch coke powders could be scarcely taken into the polyparaphenylene film and the current could be supplied on the test cell of the film polymerized with the current quantity similar to Example was 0.18 mAH.

Although the Examples employing the cell active material as the functional particles were explained on the basis of the experiments with reference to the Examples employing active cell material as the functional powders, the present invention is not limited to the cell electrodes, but may also be applied to a variety of applications, such as sensors, electrochromic devices, magnetic recording media or superconducting materials.

It will be seen from above that, since the current collector, binder and the electrically conductive material, constituting the electrode, are replaced by the electrically conductive polymer, the quantity of the active material is effectively increased to provide for high energy density of the cell.

If the electrically conductive polymer is to be formed by electrolytic polymerization, an electrode having a film thickness equivalent to the particle size of the powders of the active material may be obtained by selecting the particle size of the active material and the polymerization conditions of the electrically conductive polymer, to provide an ultrathin cell which is less than 1 mm thick and can be directly built into an electronic equipment.

Further since the electrolytic polymerization is performed in accordance with the present invention with the electrolytic electrode placed horizontally, any types of the functional particles can be taken into the electrically conductive high polymer.

Since the functional particles can be taken in a larger quantity into the electrically conductive high polymer, so that it becomes possible to provide the electrically conductive high polymer with excellent functionality.

In accordance with the present invention, two or more different functional particles can be taken, while the composition of the functional particles can be changed freely to deal with more variegated usages through multiplication of the functions.

## Claims

1. An electrode for a cell comprising powders of an active material and an electrically conducting polymer.

2. The electrode for a cell according to claim 1 wherein the powders of the active material are the powders of anode active materials and the electrically conductive polymer has cationic doping capability.

3. The electrode for a cell according to claim 1 wherein the powders of the active material are the powders of the anode active material and the electrically conductive polymer has anionic doping capability.

4. The electrode for a cell according to claims 1, 2 or 3 wherein the electrically conductive polymer is formed by electrochemical polymerization and wherein the powders of the active material are taken into the electrically conductive polymer during electrochemical polymerization and thereby formed into a complex.

5. The electrode for a cell according to claim 4, wherein said electrochemical polymerization is carried out by use of a pair of electrodes for electrochemical polymerization and one of said electrodes for electrochemical polymerization is provided substantially horizontally.

6. A method for electrochemical polymerization comprising the steps of, providing a pair of electrodes in an electrochemically polymerizable solution, in which at least one of said electrodes on which electrically conductive polymer being deposited is provided horizontally, precipitating particles of functional material in said solution, applying current between said pair of electrodes for carrying out electrochemical polymerization.

## Patentansprüche

1. Elektrode für eine Zelle, umfassend Pulver aus einem aktiven Material und ein elektrisch leitendes Polymer.

2. Elektrode für eine Zelle nach Anspruch 1, wobei die Pulver des aktiven Materials die Pulver von anodenaktiven Materialien sind und das elektrisch leitende Polymer zur kationischen Dotierung in der Lage ist.

3. Elektrode für eine Zelle nach Anspruch 1, wobei die Pulver des aktiven Materials die Pulver des anodenaktiven Materials sind und das elektrisch leitende Polymer zur anionischen Dotierung in der Lage ist.

4. Elektrode für eine Zelle nach den Ansprüchen 1. 2 oder 3, wobei das elektrisch leitende Polymer durch elektrochemische Polymerisation gebildet worden ist und wobei die Pulver des aktiven Materials in das elektrisch leitende Polymer während der elektrochemischen Polymerisation aufgenommen und dadurch zu einem Komplex gebildet worden sind.

5. Elektrode für eine Zelle nach Anspruch 4, wobei die elektrochemische Polymerisation durch Verwendung eines Paars Elektroden für die elektrochemische Polymerisation durchgeführt worden ist, wobei eine der Elektroden für die elektrochemische Polymerisation im wesentlichen horizontal angeordnet ist.

6. Verfahren zur elektrochemischen Polymerisation, umfassend die Schritte des Vorsehens eines Paars Elektroden in einer elektrochemisch polymerisierbaren Lösung, wobei mindestens eine der Elektroden, auf welcher ein elektrisch leitendes Polymer abgeschieden wird, horizontal angeordnet ist, des Ausfällens von Teilchen eines funktionellen Materials in der Lösung, des Anlegens eines Stroms zwischen dem Paar Elektroden zur Durchführung der elektrochemischen Polymerisation.

## Revendications

1. Electrode de batterie incorporant de la poudre de matériau actif et un polymère électriquement conducteur.

2. Electrode de batterie selon la revendication 1, dans laquelle les poudres de matériau actif sont des poudres de matériau actif d'anode et le polymère électriquement conducteur a une capacité de dopage cationique.

3. Electrode de batterie selon la revendication 1, dans laquelle les poudres de matériau actif sont des poudres de matériau actif d'anode et le polymère électriquement conducteur a une capacité de dopage anionique.

4. Electrode de batterie selon les revendications 1, 2 ou 3, dans laquelle on forme le polymère électriquement conducteur par polymérisation électrochimique et dans laquelle les poudres de matériau actif sont incorporées dans le polymère électriquement conducteur pendant la polymérisation électrochimique de façon à former un complexe.

5. Electrode de batterie selon la revendication 4, dans laquelle on réalise ladite polymérisation électrochimique en utilisant une paire d'électrodes pour la polymérisation électrochimique et l'une desdites électrodes de polymérisation électrochimique est installée sensiblement horizontalement.

6. Procédé de polymérisation électrochimique comprenant les étapes de fournir une paire d'électrodes dans la solution électrochimiquement polymérisable, en ce que au moins l'une desdites électrodes sur laquelle on dépose le polymère électriquement conducteur est installée horizontalement, on précipite les particules de matériau fonctionnelles dans ladite solution, on applique un courant entre ladite paire d'électrodes pour réaliser la polymérisation électrochimique.
